# EUROPEAN PATENT SPECIFICATION

(11) **EP 4 552 865 B1**
(45) Date of publication and mention of the grant of the patent: **19.08.2026**
(21) Application number: 24208887.0
(22) Date of filing: 25.10.2024
(51) Int. Cl.: B60C 13/00, B60C 15/06, B60C 3/04, B60C 9/28

(54) **TIRE**
REIFEN
PNEUMATIQUE

(30) Priority: 10.11.2023 JP 2023192459
(43) Date of publication of application: 14.05.2025
(73) Proprietor: Sumitomo Rubber Industries, Ltd., Kobe-shi, Hyogo 651-0072 (JP)
(72) Inventor: SAWAKAMI, Isao, Kobe-shi, 651-0072 (JP)
(74) Representative: Manitz Finsterwald Patent- und Rechtsanwaltspartnerschaft mbB

(56) References cited:
- JP-B2- 3 477 312
- US-A1- 2013 199 688
- US-A1- 2014 158 270
- US-A1- 2017 274 710
- US-B2- 9 272 577

## Description

### BACKGROUND OF THE INVENTION

### Field of the Invention

The present invention relates to a tire. Specifically, the present invention relates to a tire that is mounted to a passenger car.

### Background Art

The mass of a tire influences rolling resistance. In consideration of influence on the environment, tires having reduced rolling resistance are required.

If the number of carcass plies constituting a carcass is reduced, the lengths of turned-up portions of the carcass plies are shortened, etc., in order to reduce tire mass, the stiffness of each bead portion is decreased.

A large load acts on each bead portion of a tire. In addition, during running, deformation and restoration are repeated in the tire. There is a concern that the bead portion is likely to be damaged. Improvement of the durability of the bead portion is required.

For example, if a new element is incorporated into each bead portion in order to improve the durability of each bead portion, the mass of the tire is increased.

Therefore, various studies have been conducted in order to establish a technology capable of maintaining the durability of each bead portion while achieving mass reduction of the tire (e.g., Japanese Laid-Open Patent Publication No. H09-286211). US 2014/158270 A1 discloses a pneumatic tire having a tread portion, buttress portions, sidewall portions and bead portions, bead cores positioned in the bead portions, a carcass extending from the tread portion through the sidewall portions to the bead cores in the bead portions, a belt layer formed over the carcass in a tire radial direction in the tread portion and including multiple belt plies, and clinch rubbers positioned over the carcass in a tire axial direction in the respective bead portions and forming outer surfaces in the bead portions. Other examples of pneumatic tires according to the prior art are shown in JP 3 477312 B2, US 2017/274710 A1, US 9272577 B and US 2013/199688 A1.

An object of the present invention is to provide a tire that can achieve improvement of durability without an increase in mass.

### SUMMARY OF THE INVENTION

A tire according to an aspect of the present invention is a HIGH LOAD CAPACITY type tire specified in the ETRTO STANDARDS MANUAL 2021. The tire includes: a pair of beads; a carcass extending on and between the pair of beads; a pair of sidewall layers located axially outward of the carcass; and a belt located radially outward of the carcass. The pair of beads each include a core and an apex located radially outward of the core. The carcass is composed of one carcass ply. The carcass ply includes a ply body extending between a pair of the cores and a pair of turned-up portions connected to the ply body and turned up at the respective cores. Each of radial heights of the pair of turned-up portions is not greater than 17% of a cross-sectional height of the tire. An average thickness F of the sidewall layer in a zone where a distance in a radial direction from a bead base line is 20 mm to 30 mm satisfies the following formula (1) represented using a constant B and a cross-sectional width SW of the tire and a width BW of the belt obtained in a reference state where the tire is fitted on a standardized rim, an internal pressure of the tire is adjusted to 290 kPa, and no load is applied to the tire, and the constant B satisfies the following formula (2) represented using an aspect ratio RA of the tire, $416 \times {\left(BW/SW-B\right)}^{2} + 4 \leq F \leq 416 \times {\left(BW/SW-B\right)}^{2} + 6 ,$ and $B = 0.84 \times \left(-0.49\times RA/100+1.22\right) .$

According to the present invention, a tire that can achieve improvement of durability without an increase in mass, is obtained.

### BRIEF DESCRIPTION OF THE DRAWINGS

FIG. 1 is a cross-sectional view showing a part of a tire according to one embodiment of the present invention;
FIG. 2 is a schematic diagram illustrating the configuration of a belt;
FIG. 3 is an enlarged cross-sectional view showing a bead portion; and
FIG. 4 is an enlarged cross-sectional view showing the bead portion.

### DETAILED DESCRIPTION

A tire of the present invention is fitted on a rim. The interior of the tire is filled with air to adjust the internal pressure of the tire. The tire fitted on the rim is also referred to as tire-rim assembly. The tire-rim assembly includes the rim and the tire fitted on the rim.

In the present invention, a state where a tire is fitted on a standardized rim, the internal pressure of the tire is adjusted to a standardized internal pressure, and no load is applied to the tire is referred to as standardized state.

A state where the tire is fitted on the standardized rim, the internal pressure of the tire is adjusted to 290 kPa, and no load is applied to the tire is referred to as reference state.

In the present invention, unless otherwise specified, the dimensions and angles of each component of the tire are measured in the standardized state.

The dimensions and angles of each component in a meridian cross-section of the tire, which cannot be measured in a state where the tire is fitted on the standardized rim, are measured in a cut plane of the tire obtained by cutting the tire along a plane including a rotation axis. In this measurement, the tire is set such that the distance between right and left beads is equal to the distance between the beads in the tire that is fitted on the standardized rim. The configuration of the tire that cannot be confirmed in a state where the tire is fitted on the standardized rim is confirmed in the above-described cut plane.

The standardized rim means a rim specified in a standard on which the tire is based. The "standard rim" in the JATMA standard, the "Design Rim" in the TRA standard, and the "Measuring Rim" in the ETRTO standard are standardized rims.

The standardized internal pressure means an internal pressure specified in the standard on which the tire is based. The "highest air pressure" in the JATMA standard, the "maximum value" recited in the "TIRE LOAD LIMITS AT VARIOUS COLD INFLATION PRESSURES" in the TRA standard, and the "INFLATION PRESSURE" in the ETRTO standard are standardized internal pressures.

A standardized load means a load specified in the standard on which the tire is based. The "maximum load capacity" in the JATMA standard, the "maximum value" recited in the "TIRE LOAD LIMITS AT VARIOUS COLD INFLATION PRESSURES" in the TRA standard, and the "LOAD CAPACITY" in the ETRTO standard are standardized loads.

In the present invention, unless otherwise specified, a load index (LI) is a load index for a HIGH LOAD CAPACITY type tire (hereinafter referred to as HLC type tire) specified in the ETRTO STANDARDS MANUAL 2021, and is an index representing a maximum mass allowed to be applied to the tire under specified conditions, that is, a maximum load capacity, as an index number.

In the present invention, a tread portion of the tire is a portion of the tire that comes into contact with a road surface. A bead portion is a portion of the tire that is fitted to a rim. A sidewall portion is a portion of the tire that extends between the tread portion and the bead portion. The tire includes a tread portion, a pair of bead portions, and a pair of sidewall portions as portions thereof.

### [Findings on Which Present Invention Is Based]

Electric vehicles are becoming increasingly widespread due to environmental considerations. Electric vehicles are equipped with batteries. Batteries enabling travelling for a distance of around 500 km are heavy. Therefore, electric vehicles tend to be heavier than conventional gasoline-powered vehicles. Thus, higher loads act on tires mounted on electric vehicles, than on tires mounted on gasoline-powered vehicles.

In order to provide tires that can support higher loads, the load index has been reviewed in the ETRTO standards, and a HIGH LOAD CAPACITY type (hereinafter referred to as HLC type) tire has been introduced as a new category.

To qualify a tire as an HLC type tire, the tire is required to be able to support a higher load than conventional tires.

To achieve this, the stiffness of the tire is increased. However, if the stiffness of the tire is increased, there is a concern that the mass of the tire is increased as described above.

Therefore, as a result of checking the ratio of a belt width to the cross-sectional width of a tire and the thickness of a sidewall layer in each bead portion, the present inventor has found that both are correlated and that if the belt width is in an appropriate range with respect to the cross-sectional width of the tire, the sidewall layer in each bead portion can be decreased while the required stiffness is provided to the tire even though a carcass that is composed of one carcass ply and has a low turned-up structure is adopted, leading to completion of the invention described below.

### [Outline of Embodiments of Present Invention]

The present invention is directed to a HIGH LOAD CAPACITY type tire specified in the ETRTO STANDARDS MANUAL 2021, the tire including: a pair of beads; a carcass extending on and between the pair of beads; a pair of sidewall layers located axially outward of the carcass; and a belt located radially outward of the carcass, wherein the pair of beads each include a core and an apex located radially outward of the core, the carcass is composed of one carcass ply, the carcass ply includes a ply body extending between a pair of the cores and a pair of turned-up portions connected to the ply body and turned up at the respective cores, each of radial heights of the pair of turned-up portions is not greater than 17% of a cross-sectional height of the tire, an average thickness F of the sidewall layer in a zone where a distance in a radial direction from a bead base line is 20 mm to 30 mm satisfies the following formula (1) represented using a constant B and a cross-sectional width SW of the tire and a width BW of the belt obtained in a reference state where the tire is fitted on a standardized rim, an internal pressure of the tire is adjusted to 290 kPa, and no load is applied to the tire, and the constant B satisfies the following formula (2) represented using an aspect ratio RA of the tire, $416 \times {\left(BW/SW-B\right)}^{2} + 4 \leq F \leq 416 \times {\left(BW/SW-B\right)}^{2} + 6 ,$ and $B = 0.84 \times \left(-0.49\times RA/100+1.22\right) .$

The tire of the present invention can achieve improvement of durability without an increase in mass. The mechanism by which this effect is achieved has not been clarified, but is inferred as follows.

In a rolling tire, compressive deformation is repeated at a surface portion in a zone ZF. A carcass is likely to be influenced by the compressive deformation, so that a countermeasure is generally taken to suppress the influence of the compressive deformation on the carcass, by thickening a sidewall layer in the zone ZF and placing the carcass away from the surface of the tire. However, with this countermeasure, it is difficult to achieve mass reduction of the tire and there is also a concern that the durability of the tire is decreased due to promotion of heat storage. Therefore, in the conventional tire, the thickness of the sidewall layer in the zone ZF is set in the range of 6 to 12 mm.

In contrast, in the tire of the present invention, when the average thickness F of the sidewall layer in the zone ZF satisfies the above-described formula (1), the width BW of the belt and the thickness of the sidewall layer in the zone ZF are well balanced. The average thickness F of the sidewall layer which commensurates with the width BW of the belt is set. In other words, this tire can optimize the average thickness F while reducing compressive strain generated in the carcass. Since the average thickness F is set at the required thickness, the tire can achieve mass reduction. Since compressive strain generated in the carcass is reduced, this tire can meet the requirements of the HLC standard. In particular, by setting the ratio (BW/SW) of the width BW of the belt to the cross-sectional width SW of the tire to be equal to the constant B represented by the formula (2), the tire can meet the requirements of the HLC standard even if the average thickness F of the sidewall layer in the zone ZF is set to 4 to 6 mm.

Even though the carcass which is composed of one carcass ply and in which the radial height of each turned-up portion is set to be not greater than 17% of the cross-sectional height of the tire is adopted, the tire allows the sidewall layer at each bead portion to be effectively made thinner while having the stiffness required to meet the requirements of the HLC standard.

This tire can achieve improvement of durability without an increase in mass.

Preferably, each of the radial heights of the pair of turned-up portions is not less than 10 mm and not greater than 20 mm. Accordingly, the carcass ply is firmly fixed at each bead. Since the carcass can sufficiently exhibit its function, the carcass can contribute to ensuring the stiffness required for the tire to meet the requirements of the HLC standard. Since an end of each turned-up portion is placed away from the vicinity of the zone ZF where large compressive strain is generated, occurrence of damage starting from the end of the turned-up portion is suppressed. The tire can have good durability.

Preferably, an angle of each of the turned-up portions with respect to the radial direction in the reference state is not less than 15 degrees.

Accordingly, deformation of each turned-up portion due to the action of a load is effectively suppressed. Since damage starting from the end of the turned-up portion is suppressed, the tire can have good durability.

Preferably, the belt includes a large number of belt cords aligned with each other, and an angle of each of the belt cords with respect to an equator plane in the reference state is not less than 20 degrees and not greater than 32 degrees. Accordingly, the belt can effectively contribute to inhibiting the contour of the carcass from being distorted.

### [Details of Embodiments of Present Invention]

Hereinafter, the present invention will be described in detail based on preferred embodiments with appropriate reference to the drawings.

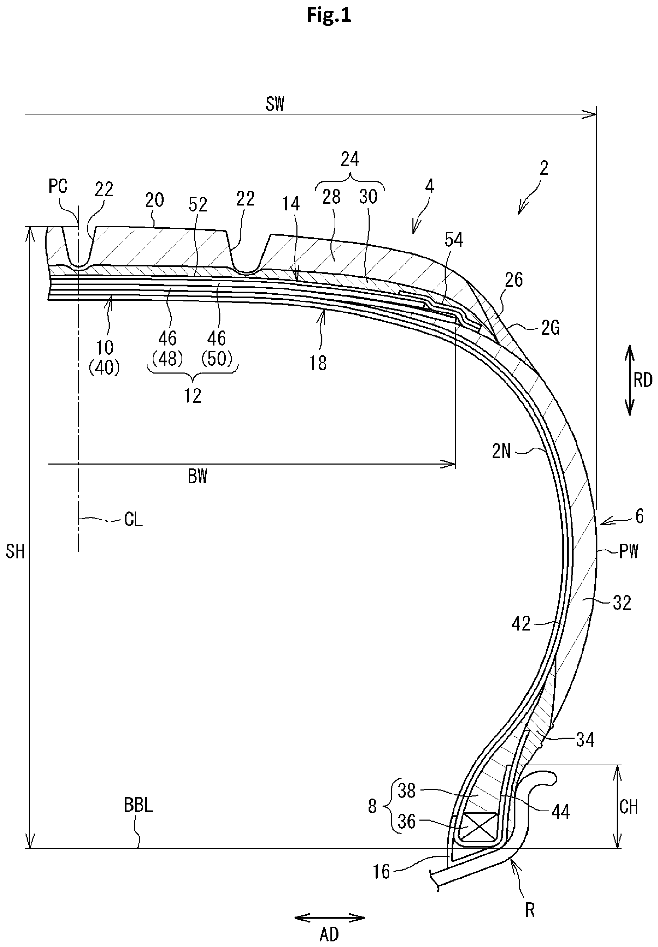

FIG. 1 shows a part of a tire 2 according to one embodiment of the present invention. The tire 2 is a pneumatic tire for a passenger car. The tire 2 is a HIGH LOAD CAPACITY type tire specified in the ETRTO STANDARDS MANUAL 2021.

FIG. 1 shows a part of a cross-section, of the tire 2, along a plane including the rotation axis (not shown) of the tire 2. The cross-section shown in FIG. 1 is also referred to as meridian cross-section. A direction indicated by a double-headed arrow AD is the axial direction of the tire 2. The axial direction of the tire 2 means a direction parallel to the rotation axis of the tire 2. A direction indicated by a double-headed arrow RD is the radial direction of the tire 2. A direction perpendicular to the drawing sheet of FIG. 1 is the circumferential direction of the tire 2.

In FIG. 1, an alternate long and short dash line CL extending in the radial direction represents the equator plane of the tire 2.

FIG. 1 shows the tire 2 fitted on a rim R. The space between the tire 2 and the rim R is filled with air, for example, to adjust the internal pressure of the tire 2. The rim R is a standardized rim. The state of the tire 2 shown in FIG. 1 is the above-described reference state.

In FIG. 1, a solid line BBL extending in the axial direction is a bead base line. This bead base line BBL is a line that defines the rim diameter (see JATMA or the like) of the rim R.

In FIG. 1, a position indicated by reference character PC is the point of intersection of an outer surface 2G of the tire 2 (specifically, a tread surface described later) and the equator plane CL. The point of intersection PC is the equator of the tire 2.

As shown in FIG. 1, in the case where a groove is located on the equator plane CL, the equator PC is specified on the basis of a virtual outer surface obtained on the assumption that no groove is provided thereon. The equator PC is the radially outer end of the tire 2. The equator PC of the tire 2 is specified in the tire 2 in the reference state.

In FIG. 1, a length indicated by a double-headed arrow SH is the cross-sectional height of the tire 2. The cross-sectional height SH is represented as the distance in the radial direction from the bead base line BBL to the equator PC of the tire 2.

The cross-sectional height SH of the tire 2 is represented as the product of a nominal cross-sectional width and a nominal aspect ratio.

In the present invention, the "nominal cross-sectional width" and the "nominal aspect ratio" mean the "nominal cross-sectional width" and the "nominal aspect ratio" included in the "tyre designation" specified in JIS D4202 "Automobile tyres-Designation and dimensions". For example, in the case where the tire size of the tire 2 is 205/55R16, the tire 2 has a nominal cross-sectional width of 205 mm and a nominal aspect ratio of 55%. In this case, the cross-sectional height SH of the tire 2 is 112.75 mm.

In FIG. 1, a position indicated by reference character PW is an axially outer end (hereinafter referred to as outer end PW) of the tire 2. In the case where decorations such as patterns and letters are present on the outer surface 2G, the outer end PW is specified on the basis of a virtual outer surface obtained on the assumption that the decorations are not present thereon.

In FIG. 1, a length indicated by a double-headed arrow SW is the cross-sectional width of the tire 2. The cross-sectional width SW is represented as the distance in the axial direction from a first outer end PW to a second outer end PW. The cross-sectional width SW is also the maximum width of the tire 2. The outer end PW is a position where the maximum width SW is indicated, and is also referred to as maximum width position PW. The cross-sectional width SW of the tire 2 is specified in the tire 2 in the reference state.

The tire 2 includes a tread 4, a pair of sidewall layers 6, a pair of beads 8, a carcass 10, a belt 12, a band 14, a pair of chafers 16, and an inner liner 18.

The tread 4 is located radially outward of the carcass 10. The tread 4 is formed from a crosslinked rubber. The tread 4 comes into contact with a road surface at a tread surface 20 thereof. The tread 4 has the tread surface 20. The outer surface 2G of the tire 2 includes the tread surface 20.

On the tread 4, grooves 22 are formed. Accordingly, a tread pattern is formed.

The tread 4 has a tread body 24 and a pair of wings 26.

Each wing 26 is located between the tread body 24 and the sidewall layer 6. The tread body 24 and the sidewall layer 6 are joined via the wing 26. The wing 26 is formed from a crosslinked rubber for which adhesiveness is taken into consideration.

The tread body 24 includes a cap portion 28 and a base portion 30.

The cap portion 28 includes the tread surface 20. The cap portion 28 comes into contact with a road surface. The cap portion 28 is formed from a crosslinked rubber for which wear resistance and grip performance are taken into consideration.

The base portion 30 is located radially inward of the cap portion 28. The base portion 30 is covered with the cap portion 28. The base portion 30 is formed from a crosslinked rubber that has low heat generation properties.

Each sidewall layer 6 is connected to the tread 4. The sidewall layer 6 is located radially inward of the tread 4. The sidewall layer 6 is located axially outward of the carcass 10. The sidewall layer 6 has a sidewall body 32 and a clinch 34.

The sidewall body 32 is connected to the tread 4. The sidewall body 32 is formed from a crosslinked rubber for which cut resistance is taken into consideration.

The clinch 34 is located radially inward of the sidewall body 32. The clinch 34 comes into contact with the rim R. The clinch 34 is formed from a crosslinked rubber for which wear resistance is taken into consideration.

Each bead 8 is located radially inward of the sidewall layer 6. Specifically, the bead 8 is located radially inward of the sidewall body 32, and is located axially inward of the clinch 34.

The bead 8 includes a core 36 and an apex 38. The core 36 extends in the circumferential direction. The core 36 includes a steel wire which is not shown. The apex 38 is located radially outward of the core 36. The apex 38 is formed from a crosslinked rubber that has high stiffness. When one bead 8 out of the pair of beads 8 is a first bead 8, the other bead 8 is a second bead 8.

The carcass 10 is located inward of the tread 4 and the pair of sidewall layers 6. The carcass 10 extends on and between the pair of beads 8. The carcass 10 extends on and between the first bead 8 and the second bead 8.

The carcass 10 is composed of one carcass ply 40. The carcass 10 of the tire 2 is lighter than a carcass including two or more carcass plies 40.

The carcass ply 40 is turned up from the inner side to the outer side in the axial direction at each bead 8. The carcass ply 40 includes a ply body 42 extending between a pair of the cores 36 and a pair of turned-up portions 44 connected to the ply body 42 and turned up at the respective cores 36.

In FIG. 1, a length indicated by a double-headed arrow CH is the radial height of the turned-up portion 44. The radial height CH of the turned-up portion 44 is represented as the distance in the radial direction from the bead base line BBL to an end of the turned-up portion 44.

The end of the turned-up portion 44 of the tire 2 is located radially inward of the maximum width position PW. Specifically, the radial height CH of the turned-up portion 44 is not greater than 17% of the cross-sectional height SH of the tire 2. The carcass 10 of the tire 2 has a low turned-up structure (LTU structure). As described above, the carcass 10 is composed of one carcass ply 40. The carcass 10 can contribute to reducing the mass of the tire 2. From this viewpoint, the radial height CH of the turned-up portion 44 is preferably not greater than 15% of the cross-sectional height SH of the tire 2.

The carcass ply 40 includes a large number of carcass cords aligned with each other, which are not shown. These carcass cords intersect the equator plane CL. The carcass cords extend on and between the first bead 8 and the second bead 8. The carcass 10 of the tire 2 has a radial structure.

In the tire 2, a cord formed from an organic fiber is used as each carcass cord. Examples of the organic fiber include nylon fibers, rayon fibers, polyester fibers, and aramid fibers.

The belt 12 is located radially inward of the tread 4. The belt 12 is located radially outward of the carcass 10. The belt 12 is stacked on the carcass 10.

In FIG. 1, a double-headed arrow BW indicates the width of the belt 12. The width BW of the belt 12 is represented as the distance in the axial direction from one end to the other end of the belt 12.

In the tire 2, the ratio BW/SW of the width BW of the belt 12 to the cross-sectional width SW of the tire 2 is not less than 0.65 and not greater than 1.00. The ratio BW/SW is preferably not less than 0.70 and not greater than 0.95.

The belt 12 includes a plurality of belt plies 46 aligned in the radial direction. The plurality of belt plies 46 includes an inner belt ply 48 located on the innermost side and an outer belt ply 50 located on the outermost side. The belt 12 of the tire 2 is composed of two belt plies 46. Specifically, the belt 12 is composed of the inner belt ply 48 and the outer belt ply 50.

The inner belt ply 48 is stacked on the carcass 10 on the radially inner side of the tread 4. The outer belt ply 50 is stacked on the inner belt ply 48.

As shown in FIG. 1, each end of the outer belt ply 50 is located axially inward of an end of the inner belt ply 48. The outer belt ply 50 is narrower than the inner belt ply 48. The length from the end of the outer belt ply 50 to the end of the inner belt ply 48 is not less than 3 mm and not greater than 10 mm. The above-described width BW of the belt 12 is represented as the width of the wider inner belt ply 48.

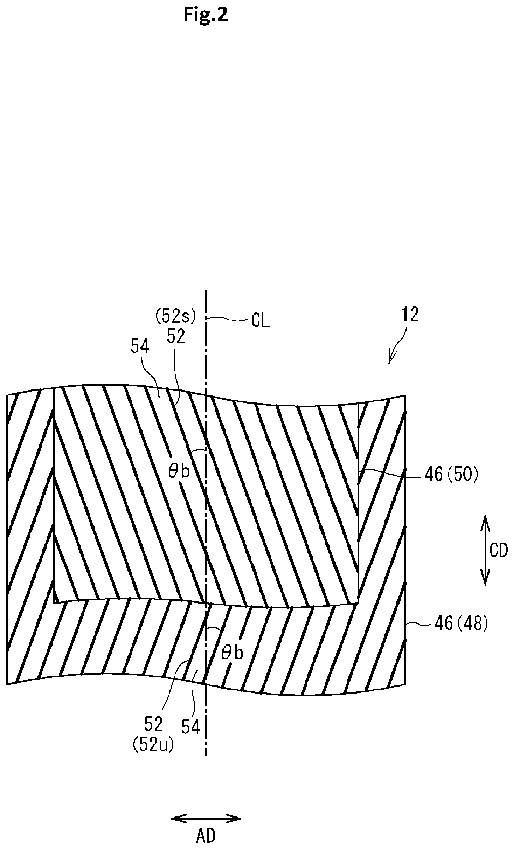

FIG. 2 shows the configuration of the belt 12. In FIG. 2, a direction indicated by a double-headed arrow AD is the axial direction of the tire 2. A direction indicated by a double-headed arrow CD is the circumferential direction of the tire 2. The front side of the drawing sheet of FIG. 2 is the radially outer side, and the back side thereof is the radially inner side.

Each of the plurality of belt plies 46 constituting the belt 12 includes a large number of belt cords 52 aligned with each other. The belt cords 52 are steel cords. For convenience of description, the belt cords 52 are represented by solid lines, but the belt cords 52 are covered with a topping rubber 54.

Each belt cord 52 is inclined with respect to the equator plane CL. The direction of inclination of the belt cords 52 included in the outer belt ply 50 (hereinafter referred to as outer belt cords 52s) is opposite to the direction of inclination of the belt cords 52 included in the inner belt ply 48 (hereinafter referred to as inner belt cords 52u).

The band 14 is stacked on the belt 12 on the inner side of the tread 4. Each end of the band 14 is located axially outward of an end of the belt 12. The length from the end of the belt 12 to the end of the band 14 is not less than 3 mm and not greater than 7 mm.

The band 14 of the tire 2 includes a full band 56 and a pair of edge bands 58.

The full band 56 covers the entire belt 12 from the outer side in the radial direction.

The pair of edge bands 58 are placed so as to be spaced apart from each other in the axial direction with the equator plane CL interposed therebetween. Each edge band 58 covers an end of the full band 56 from the outer side in the radial direction.

The band 14 may be composed of only the full band 56, or may be composed of only the pair of edge bands 58.

The band 14 includes a helically wound band cord which is not shown. In the band 14, the band cord extends substantially in the circumferential direction. Specifically, an angle of the band cord with respect to the circumferential direction is not greater than 5°. The band 14 has a jointless structure. A cord formed from an organic fiber is used as the band cord. Examples of the organic fiber include nylon fibers, rayon fibers, polyester fibers, and aramid fibers.

The band cord included in the full band 56 and the band cord included in each edge band 58 are the same. The band cord in the full band 56 and the band cord in each edge band 58 may be different.

Each chafer 16 is located radially inward of the bead 8. The chafer 16 comes into contact with the rim R. In the tire 2, the chafer 16 includes a fabric and a rubber with which the fabric is impregnated.

As shown in FIG. 1, an inner end of the chafer 16 forms a part of an inner surface 2N of the tire 2. An outer end of the chafer 16 is located radially outward of the inner end thereof. The outer end of the chafer 16 is located between the bead 8 and the clinch 34.

The inner liner 18 is located inward of the carcass 10. The inner liner 18 forms the inner surface 2N of the tire 2. The inner liner 18 is formed from a crosslinked rubber that has an excellent air blocking property. The inner liner 18 maintains the internal pressure of the tire 2.

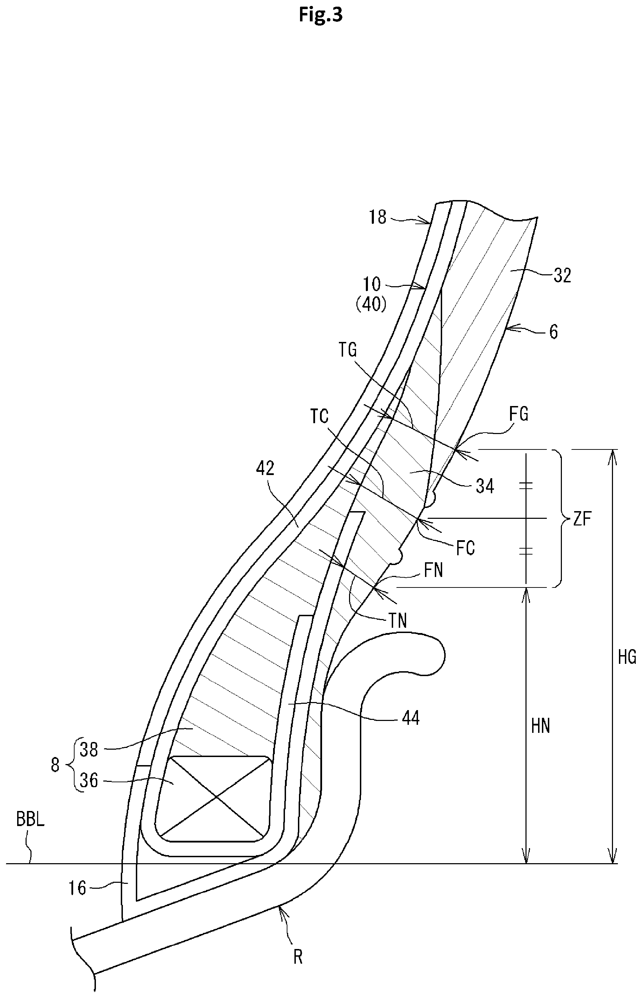

FIG. 3 shows a part of the tire 2 shown in FIG. 1. FIG. 3 shows a bead portion of the tire 2.

A position indicated by reference character FN is a position on the outer surface 2G of the tire 2. A distance HN in the radial direction from the bead base line BBL to the position FN is 20 mm.

A position indicated by reference character FG is a position on the outer surface 2G of the tire 2. A distance HG in the radial direction from the bead base line BBL to the position FG is 30 mm.

FIG. 3 represents a zone from the position FN to the position FG as a zone ZF. The zone ZF is a zone where the distance in the radial direction from the bead base line BBL is 20 mm to 30 mm.

The position FN is an inner end of the zone ZF, and the position FG is an outer end of the zone ZF.

A position indicated by reference character FC is the point of intersection of a radial center line of the zone ZF and the outer surface 2G of the tire 2. The position FC is the center of the zone ZF.

Strain is generated in the tire 2 due to the action of a load. In particular, large compressive strain is generated in the vicinity of the zone ZF. To prevent damage to the bead portion, the sidewall layer 6 is formed so as to be thicker in the vicinity of the zone ZF than in the other portion.

In FIG. 3, a length indicated by a double-headed arrow TN is the thickness of the sidewall layer 6 at the inner end FN of the zone ZF. A length indicated by a double-headed arrow TG is the thickness of the sidewall layer 6 at the outer end FG of the zone ZF. A length indicated by a double-headed arrow TC is the thickness of the sidewall layer 6 at the center FC of the zone ZF. Each of the thickness TN, the thickness TG, and the thickness TC is measured along a normal line of the outer surface of the tire 2.

In the present invention, an average thickness F of the sidewall layer 6 in the zone ZF is represented as the average value of the thickness TN, the thickness TG, and the thickness TC.

Focusing on the fact that a width BW of a belt influences the contour of a carcass (specifically, a ply body) and that strain generated in each bead portion increases and the durability of the tire decreases if the contour of the carcass is distorted, the present inventor has conducted an intensive study on how much average thickness F of the sidewall layer in the zone ZF described above is enough to allow a tire to meet the requirements of a HIGH LOAD CAPACITY type (hereinafter referred to as HLC standard) specified in the ETRTO STANDARDS MANUAL 2021, while adjusting the width BW of the belt. As a result, a relational expression shown below has been obtained for the average thickness F of the sidewall layer 6 in the zone ZF.

That is, the average thickness F of the sidewall layer 6 in the zone ZF satisfies the following formula (1) represented using a constant B and the cross-sectional width SW of the tire 2 and the width BW of the belt 12 obtained in the reference state of the tire 2. $416 \times {\left(BW/SW-B\right)}^{2} + 4 \leq F \leq 416 \times {\left(BW/SW-B\right)}^{2} + 6$

The units of the average thickness F, the cross-sectional width SW, and the width BW are mm (millimeters).

Furthermore, the constant B satisfies the following formula (2) represented using an aspect ratio RA of the tire 2. $B = 0.84 \times \left(-0.49\times RA/100+1.22\right)$

The "nominal aspect ratio" is used as the aspect ratio RA in the formula (2). For example, in the case where the tire size of a tire is 205/55R16, this tire has a nominal aspect ratio RA of 55%. In this case, the constant B is 0.80.

If the average thickness F is less than 416 × (BW/SW - B)² + 4, the sidewall layer 6 in the zone ZF becomes excessively thin, and there is a concern that the tire cannot meet the requirements of the HLC standard.

If the average thickness F is greater than 416 × (BW/SW - B)² + 6, the sidewall layer 6 in the zone ZF becomes excessively thick, and there is a concern that the significance of adopting the carcass 10 which is composed of one carcass ply 40 and has an LTU structure for mass reduction, is lost.

However, when the average thickness F satisfies the above-described formula (1), the width BW of the belt 12 and the thickness of the sidewall layer 6 in the zone ZF are well balanced. The average thickness F of the sidewall layer 6 which commensurates with the width BW of the belt 12 is set. In other words, the tire 2 can optimize the average thickness F while reducing compressive strain generated in the carcass 10. Since the average thickness F is set at the required thickness, the tire 2 can achieve mass reduction. Since compressive strain generated in the carcass 10 is reduced, the tire 2 can meet the requirements of the HLC standard. In particular, by setting the ratio (BW/SW) of the width BW of the belt 12 to the cross-sectional width SW of the tire 2 to be equal to the constant B represented by the formula (2), the tire 2 can meet the requirements of the HLC standard even if the average thickness F of the sidewall layer 6 in the zone ZF is set to 4 to 6 mm.

Even though the carcass 10 which is composed of one carcass ply 40 and has a low turned-up structure is adopted, the tire 2 allows the sidewall layer 6 at the bead portion to be effectively made thinner while the stiffness required to meet the requirements of the HLC standard is provided to the tire 2.

The tire 2 can achieve improvement of durability without an increase in mass.

The radial height CH of the turned-up portion 44 is preferably not less than 10 mm and not greater than 20 mm.

When the radial height CH is set to be not less than 10 mm, the carcass ply 40 is firmly fixed at the bead 8. The carcass 10 can sufficiently exhibit its function. The carcass 10 can contribute to ensuring the stiffness required for the tire 2 to meet the requirements of the HLC standard.

When the radial height CH is set to be not greater than 20 mm, the end of the turned-up portion 44 is placed away from the vicinity of the zone ZF where large compressive strain is generated. Occurrence of damage starting from the end of the turned-up portion 44 is suppressed. The tire 2 has good durability. From this viewpoint, the radial height CH is more preferably not greater than 15 mm.

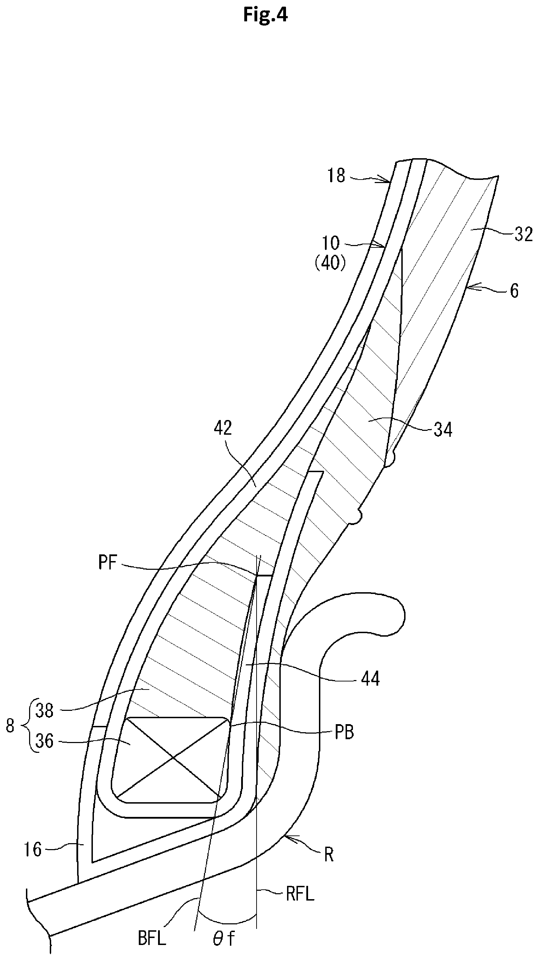

FIG. 4 shows a part of the tire 2 shown in FIG. 1. FIG. 4 shows the bead portion of the tire 2.

In FIG. 4, a position indicated by reference character PF is the end of the turned-up portion 44. A position indicated by reference character PB is the radially outer end of a contact surface between the turned-up portion 44 and the core 36. The radially outer end PB is a separation point at which the turned-up portion 44 is separated from the core 36 (hereinafter referred to as separation point of the turned-up portion 44). A solid line BFL is a straight line passing through the separation point PB and the end PF of the turned-up portion 44. A solid line RFL is a straight line passing through the end PF of the turned-up portion 44 and extending in the radial direction.

An angle θf is an angle between the straight line BFL and the straight line RFL.

In the present invention, the angle θf is an angle of the turned-up portion 44 with respect to the radial direction.

In the reference state, the angle θf of the turned-up portion 44 with respect to the radial direction is preferably not less than 15 degrees. Accordingly, deformation of the turned-up portion 44 due to the action of a load is effectively suppressed. Damage starting from the end of the turned-up portion 44 is suppressed. The tire 2 has good durability. From this viewpoint, the angle θf is more preferably not less than 17 degrees.

From the viewpoint of being able to suppress damage starting from the end of the turned-up portion 44, it is more preferable that the angle θf is larger. However, it is difficult to produce the tire 2 such that the angle θf exceeds 25 degrees in the reference state. From the viewpoint that the production of the tire 2 is possible, the angle θf is preferably not greater than 25 degrees in the reference state.

From the viewpoint that the tire 2 can effectively achieve improvement of durability without an increase in mass, it is more preferable that the radial height CH of the turned-up portion 44 is not less than 10 mm and not greater than 20 mm and the angle θf of the turned-up portion 44 with respect to the radial direction in the reference state is not less than 15 degrees.

As described above, the belt cords 52 are inclined with respect to the equator plane CL. In FIG. 2, an angle θb represents an angle of the belt cords 52 included in the belt 12 with respect to the equator plane CL.

From the viewpoint that the belt 12 can effectively contribute to inhibiting the contour of the carcass 10 from being distorted, the angle θb of the belt cords 52 with respect to the equator plane CL in the reference state is preferably not less than 20 degrees and not greater than 32 degrees, and more preferably not less than 24 degrees and not greater than 30 degrees. In this case, it is more preferable that the angle θb of the belt cords 52 included in the inner belt ply 48 with respect to the equator plane CL and the angle θb of the belt cords 52 included in the outer belt ply 50 with respect to the equator plane CL are the same.

As is obvious from the above description, according to the present invention, a tire that can achieve improvement of durability without an increase in mass, is obtained. In particular, according to the present invention, a HIGH LOAD CAPACITY type tire, specified in the ETRTO STANDARDS MANUAL 2021, which can achieve improvement of durability without an increase in mass, is obtained.

The above-described technology capable of achieving improvement of durability without an increase in mass can be applied to various tires.

## Claims

1. A HIGH LOAD CAPACITY type tire (2) specified in the ETRTO STANDARDS MANUAL 2021, the tire (2) comprising:
a pair of beads (8);
a carcass (10) extending on and between the pair of beads (8);
a pair of sidewall layers (6) located axially outward of the carcass (10), each sidewall layer (6) having a sidewall body (32) and a clinch (34); and
a belt (12) located radially outward of the carcass (10), wherein
the pair of beads (8) each include a core (36) and an apex (38) located radially outward of the core (36),
the carcass (10) is composed of one carcass ply (40),
the carcass ply (40) includes a ply body (42) extending between a pair of the cores (36) and a pair of turned-up portions (44) connected to the ply body (42) and turned up at the respective cores (36),
each of radial heights (CH) of the pair of turned-up portions (44) is not greater than 17% of a cross-sectional height (SH) of the tire (2),
an average thickness F of the sidewall layer (6) in a zone (ZF) where a distance in a radial direction from a bead base line (BBL) is 20 mm to 30 mm satisfies the following formula (1) represented using a constant B and a cross-sectional width SW of the tire (2) and a width BW of the belt (12) obtained in a reference state where the tire (2) is fitted on a standardized rim (R), an internal pressure of the tire (2) is adjusted to 290 kPa, and no load is applied to the tire (2), and
the constant B satisfies the following formula (2) represented using an aspect ratio RA of the tire (2), wherein the cross-sectional width SW and the width BM are provided in mm and RA as percentage, $416 \times {\left(BW/SW-B\right)}^{2} + 4 \leq F \leq 416 \times {\left(BW/SW-B\right)}^{2} + 6 ,$ and $B = 0.84 \times \left(-0.49\times RA/100+1.22\right) .$

2. The tire (2) according to claim 1, wherein each of the radial heights (CH) of the pair of turned-up portions (44) is not less than 10 mm and not greater than 20 mm.

3. The tire (2) according to claim 1 or 2, wherein an angle (θf) of each of the turned-up portions (44) with respect to the radial direction in the reference state is not less than 15 degrees.

4. The tire (2) according to any one of claims 1 to 3, wherein
the belt (12) includes a large number of belt cords (52) aligned with each other, and
an angle (θb) of each of the belt cords (52) with respect to an equator plane (CL) in the reference state is not less than 20 degrees and not greater than 32 degrees.

## Patentansprüche

1. Reifen (2) vom Typ mit hoher Belastungsfähigkeit, der im ETRTO STANDARDS MANUAL 2021 spezifiziert ist, wobei der Reifen (2) umfasst:
ein Paar Wülste (8);
eine Karkasse (10), die sich auf und zwischen dem Paar Wülsten (8) erstreckt;
ein Paar Seitenwandschichten (6), die axial außen von der Karkasse (10) angeordnet sind, wobei jede Seitenwandschicht (6) einen Seitenwandkörper (32) und einen Wulstschutzstreifen (34) aufweist; und
einen Gürtel (12), der radial außen von der Karkasse (10) angeordnet ist, wobei
das Paar Wülste (8) jeweils einen Kern (36) und einen Kernreiter (38) umfasst, der radial außen von dem Kern (36) angeordnet ist,
die Karkasse (10) aus einer Karkasslage (40) zusammengesetzt ist,
die Karkasslage (40) einen Lagenkörper (42), der sich zwischen einem Paar der Kerne (36) erstreckt, und ein Paar Umschlagabschnitte (44) umfasst, die mit dem Lagenkörper (42) verbunden sind und an den jeweiligen Kernen (36) umgeschlagen sind,
jede von radialen Höhen (CH) des Paars Umschlagabschnitte (44) nicht größer als 17 % einer Querschnittshöhe (SH) des Reifens (2) ist,
eine durchschnittliche Dicke F der Seitenwandschicht (6) in einer Zone (ZF), in der ein Abstand in einer radialen Richtung von einer Wulstbasislinie (BBL) 20 mm bis 30 mm beträgt, die folgende Formel (1) erfüllt, die unter Verwendung einer Konstanten B und einer Querschnittsbreite SW des Reifens (2) und einer Breite BW des Gürtels (12) dargestellt ist, erhalten in einem Referenzzustand, in dem der Reifen (2) auf eine standardisierte Felge (R) aufgezogen ist, ein Innendruck des Reifens (2) auf 290 kPa eingestellt ist und keine Belastung auf den Reifen (2) ausgeübt wird, und
die Konstante B die folgende Formel (2) erfüllt, die unter Verwendung eines Aspektverhältnisses RA des Reifens (2) dargestellt ist, wobei die Querschnittsbreite SW und die Breite BM in mm und RA als Prozentsatz angegeben sind, $416 \times {\left(BW/SW-B\right)}^{2} + 4 \leq F \leq 416 \times {\left(BW/SW-B\right)}^{2} + 6 ,$ und $B = 0 , 84 \times \left(-0,49\times RA/100+1,22\right) .$

2. Reifen (2) nach Anspruch 1, wobei jede der radialen Höhen (CH) des Paars Umschlagabschnitte (44) nicht kleiner als 10 mm und nicht größer als 20 mm ist.

3. Reifen (2) nach Anspruch 1 oder 2, wobei ein Winkel (θf) von jedem der Umschlagabschnitte (44) in Bezug auf die radiale Richtung in dem Referenzzustand nicht kleiner als 15 Grad ist.

4. Reifen (2) nach einem der Ansprüche 1 bis 3, wobei
der Gürtel (12) eine große Anzahl von Gürtelkorden (52) umfasst, die miteinander ausgerichtet sind, und
ein Winkel (θb) von jedem der Gürtelkorde (52) in Bezug auf eine Äquatorebene (CL) in dem Referenzzustand nicht kleiner als 20 Grad und nicht größer als 32 Grad ist.

## Revendications

1. Pneumatique (2) de type à haute capacité de charge spécifié dans le manuel de normes ETRTO STANDARDS MANUAL 2021, le pneumatique (2) comprenant :
une paire de talons (8) ;
une carcasse (10) s'étendant sur et entre la paire de talons (8) ;
une paire de couches de parois latérales (6) situées axialement à l'extérieur de la carcasse (10), chaque couche de paroi latérale (6) présentant un corps de paroi latérale (32) et une coiffe de talon (34) ; et
une ceinture (12) située radialement à l'extérieur de la carcasse (10), dans lequel
la paire de talons (8) incluent chacun une âme (36) et un apex (38) situé radialement à l'extérieur de l'âme (36),
la carcasse (10) est composée d'une nappe de carcasse (40),
la nappe de carcasse (40) inclut un corps de nappe (42) s'étendant entre une paire des âmes (36) et une paire de portions retroussées (44) reliées au corps de nappe (42) et retroussées au niveau des âmes (36) respectives,
chacune des hauteurs radiales (CH) de la paire de portions retroussées (44) n'est pas supérieure à 17 % d'une hauteur de section transversale (SH) du pneumatique (2),
une épaisseur moyenne F de la couche de paroi latérale (6) dans une zone (ZF) où une distance dans une direction radiale depuis une ligne de base de talon (BBL) est de 20 mm à 30 mm satisfait à la formule (1) suivante représentée à l'aide d'une constante B et d'une largeur de section transversale SW du pneumatique (2) et d'une largeur BW de la ceinture (12) obtenues dans un état de référence où le pneumatique (2) est monté sur une jante standardisée (R), une pression interne du pneumatique (2) est ajustée à 290 kPa, et aucune charge n'est appliquée au pneumatique (2), et
la constante B satisfait à la formule (2) suivante représentée à l'aide d'un rapport d'aspect RA du pneumatique (2), dans lequel la largeur de section transversale SW et la largeur BM sont exprimées en mm et RA en pourcentage, $416 \times {\left(BW/SW-B\right)}^{2} + 4 \leq F \geq 416 \times {\left(BW/SW-B\right)}^{2} + 6 ,$ et $B = 0 , 84 \times \left(-0,49\times RA/100+1,22\right) .$

2. Pneumatique (2) selon la revendication 1, dans lequel chacune des hauteurs radiales (CH) de la paire de portions retroussées (44) n'est pas inférieure à 10 mm et n'est pas supérieure à 20 mm.

3. Pneumatique (2) selon la revendication 1 ou 2, dans lequel un angle (θf) de chacune des portions retroussées (44) par rapport à la direction radiale dans l'état de référence n'est pas inférieur à 15 degrés.

4. Pneumatique (2) selon l'une quelconque des revendications 1 à 3, dans lequel la ceinture (12) inclut un grand nombre de câblés de ceinture (52) alignés les uns avec les autres, et
un angle (θb) de chacun des câblés de ceinture (52) par rapport à un plan d'équateur (CL) dans l'état de référence n'est pas inférieur à 20 degrés et n'est pas supérieur à 32 degrés.
